# EUROPEAN PATENT APPLICATION

(11) **EP 4 258 759 A1**
(43) Date of publication of application: **11.10.2023**
(21) Application number: 23166045.7
(22) Date of filing: 31.03.2023
(51) Int. Cl.: H04W 56/00

(54) **PERIPHERAL TIME SERVER DEVICE**

(30) Priority: 05.04.2022 US 202217714005
(71) Applicant: Meta Platforms, Inc., Menlo Park, CA 94025 (US)
(72) Inventor: BYAGOWI, Ahmad, California, 94025 (US); SCHMIDTKE, Hans-Juergen, California, 94025 (US); ST. JAMES, Julian Alexander, California, 94025 (US); LAMBETA, Michael Maroye, California, 94025 (US)
(74) Representative: Murgitroyd & Company

(57) **Abstract**

The disclosed device may include a wireless interface for receiving a time signal, an oscillator, and a processor. The processor may determine, using the oscillator and the time signal, a precise time, and synchronize with one or more remote devices using the precise time. Various other methods, systems, and computer-readable media are also disclosed.

## Description

### TECHNICAL FIELD

The present disclosure is generally directed to devices, systems and methods for providing precise time.

### BACKGROUND

In a distributed system of computing devices, synchronization amongst the devices may ensure more reliable communication and performance. To ensure synchronization, a distributed system may use a time server. A time server may represent a server that reads an actual (e.g., representing a correct real-world time) and precise (e.g., accurate to within a threshold such as 10 milliseconds) time from a reference clock and distributes the time to client devices. In some cases, the time server may read the precise time from a global navigation satellite system ("GNSS") using a GNSS antenna.

Unfortunately, a GNSS antenna may require an unobstructed view of the sky for proper operation, which may limit suitable locations for placement. In addition, the GNSS antenna may connect to the time server via a physical coaxial connection to mitigate degradation or interference when reading the precise time. However, such requirements may limit the mobility of the time server. In other words, user devices such as laptops, desktops, smartphones, etc., may not readily be able to obtain the precise time from a GNSS network.

### SUMMARY OF THE INVENTION

In a first aspect of the present invention there is provided a device comprising: a wireless interface for receiving a time signal; an oscillator; and a processor configured to: determine, using the oscillator and the time signal, a precise time; and synchronize with one or more remote devices using the precise time.

The time signal may be received from a global navigation satellite system (GNSS)-enabled device configured to generate the time signal.

The processor may be configured to determine the precise time by estimating a distance to the GNSS-enabled device.

The processor may be configured to estimate the distance based on a signal strength of the time signal.

The GNSS-enabled device may comprise: a second wireless interface for sending the time signal; a GNSS antenna for receiving a GNSS signal; a second oscillator; and a second processor configured to generate, using the second oscillator and the GNSS signal, the time signal.

A form factor of the device may be similar to a form factor of a peripheral storage device.

The device may further comprise a storage device.

The wireless interface may be configured for an ultra-wideband (UWB) protocol.

In a second aspect of the present invention, there is provided a system comprising: a precise-time device comprising: a wireless interface for receiving a time signal; an oscillator; and a processor configured to: determine, using the oscillator and the time signal, a precise time; and synchronize with one or more remote devices using the precise time; and a global navigation satellite system (GNSS)-enabled device comprising: a second wireless interface for sending the time signal to the precise-time device; a GNSS antenna for receiving a GNSS signal; a second oscillator; and a second processor configured to generate, using the GNSS signal and the second oscillator, the time signal.

The processor may be configured to determine the precise time by estimating a distance between the precise-time device and the GNSS-enabled device.

The processor may be configured to estimate the distance based on a signal strength of the time signal.

A form factor of the precise-time device may be similar to a form factor of a peripheral storage device.

The precise-time device may further comprise a storage device.

The wireless interface and the second wireless interface may be configured for an ultra-wideband (UWB) protocol.

In a third aspect of the present invention, there is provided a method comprising: receiving, via a wireless interface of a precise-time device, a time signal; determining, by a processor of the precise-time device using an oscillator of the precise-time device and the received time signal, a precise time; and synchronizing with one or more remote devices using the precise time.

The time signal may be received from a global navigation satellite system (GNSS)-enabled device configured to generate the time signal.

The determining the precise time may comprise estimating a distance between the precise-time device and the GNSS-enabled device.

The estimating of the distance may be based on a signal strength of the time signal.

The receiving of the time signal may further comprise receiving the time signal using an ultra-wideband (UWB) protocol.

The method may further comprise provisioning the precise-time device in a peripheral storage device connector of a computing device.

In a fourth aspect of the present invention, there is provided a program comprising one or more computer-executable instructions that, when executed by at least one processor of a device or system, cause the device or system to function as the claimed device or claimed system, or cause the computing device to carry out the claimed method. Such a program can be provided by itself or carried by a carrier medium. The carrier medium may be a recording or other storage medium. The transmission medium may be a signal.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a block diagram of an exemplary system for a peripheral time server device.
FIG. 2 is a block diagram of an exemplary network for a peripheral time server device.
FIG. 3 is a flow diagram of an exemplary method for determining a precise time using a peripheral time server device.
FIG. 4 is a diagram of an exemplary environment for a peripheral time server device.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

In a distributed system of computing devices, synchronization amongst the devices may ensure more reliable communication and performance. To ensure synchronization, a distributed system may use a time server. A time server may represent a server that reads an actual (e.g., representing a correct real-world time) and precise (e.g., accurate to within a threshold such as 10 milliseconds) time from a reference clock and distributes the time to client devices. In some cases, the time server may read the precise time from a global navigation satellite system ("GNSS") using a GNSS antenna.

Unfortunately, a GNSS antenna may require an unobstructed view of the sky for proper operation, which may limit suitable locations for placement. In addition, the GNSS antenna may connect to the time server via a physical coaxial connection to mitigate degradation or interference when reading the precise time. However, such requirements may limit the mobility of the time server. In other words, user devices such as laptops, desktops, smartphones, etc., may not readily be able to obtain the precise time from a GNSS network.

The present disclosure is generally directed to a peripheral device for providing precise time. As will be explained in greater detail below, embodiments of the present disclosure may wirelessly receive a time signal, determine a precise time using the time signal and an oscillator, and synchronize with remote devices using the precise time. As will be explained in greater detail below, the systems and methods described herein may advantageously provision a peripheral device that may enable precise-timing operations in devices without the physical constraints exhibited by a time server. The systems and methods described herein may further improve the technical field of distributed systems and communications by providing precision timing capabilities to additional devices, such as portable devices.

Features from any of the embodiments described herein may be used in combination with one another in accordance with the general principles described herein. These and other embodiments, features, and advantages will be more fully understood upon reading the following detailed description in conjunction with the accompanying drawings and claims.

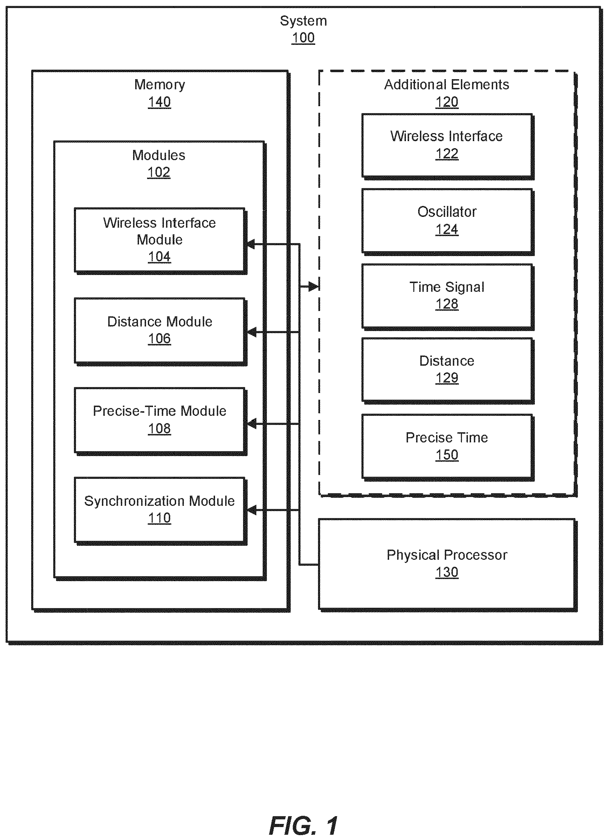

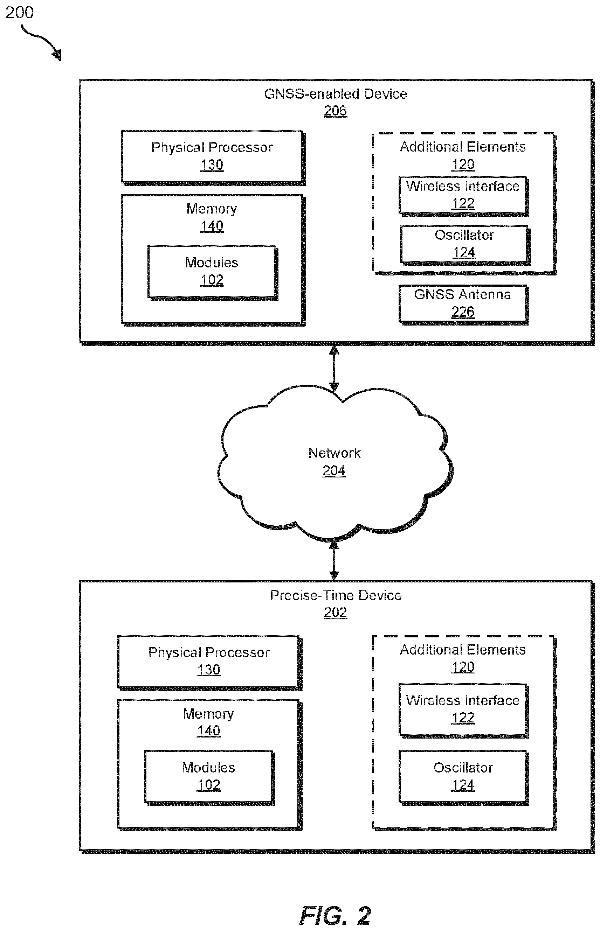

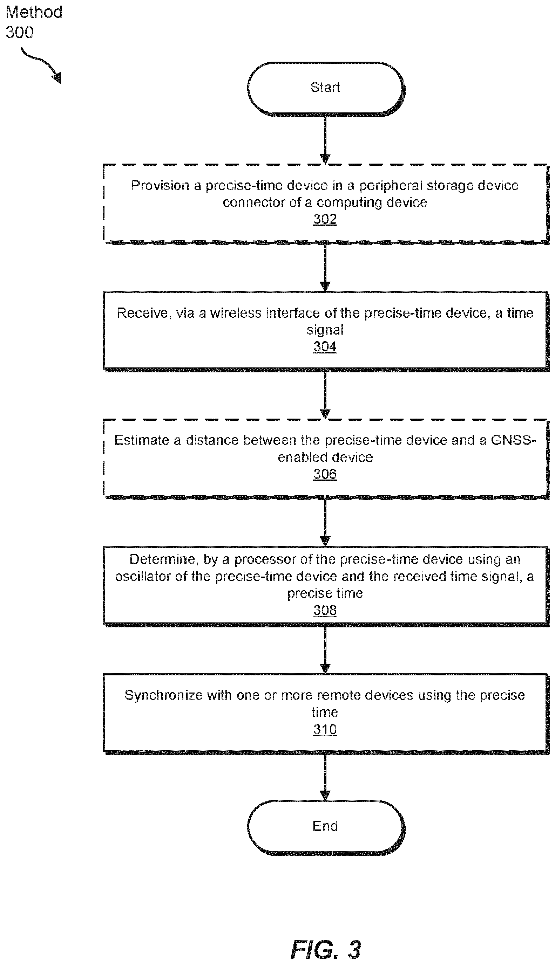

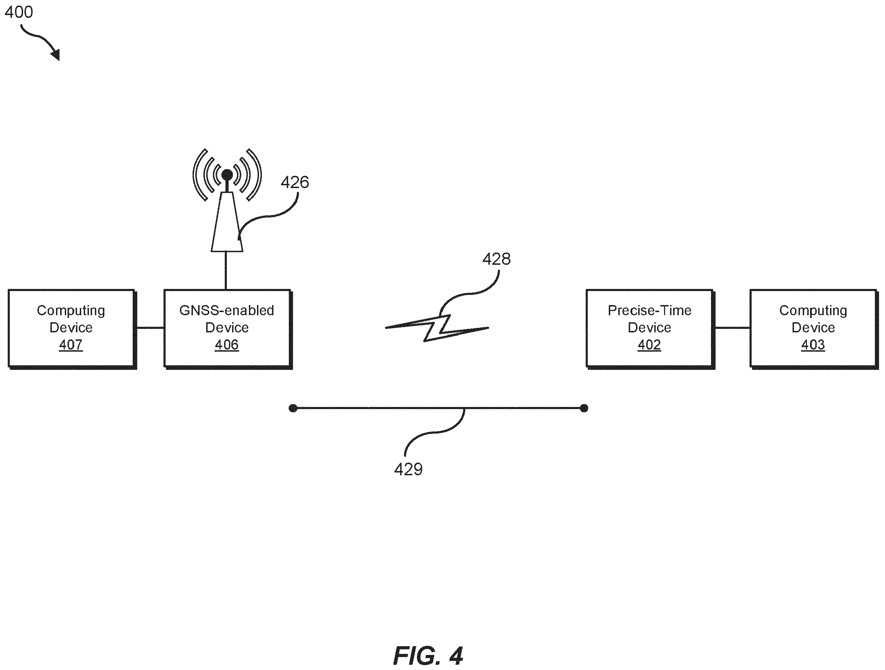

The following will provide, with reference to FIGS. 1-4, detailed descriptions of a peripheral precise-time device. Detailed descriptions of an example system and network environment for the peripheral precise-time device are provided with FIGS. 1 and 2. Detailed descriptions of determining a precise time using the precise-time device are provided with FIG. 3. Detailed descriptions of an example implementation of the precise-time device are provided with FIG. 4.

FIG. 1 is a block diagram of an example system 100 for a peripheral time server device, also referred to herein as a precise-time device. As illustrated in this figure, example system 100 may include one or more modules 102 for performing one or more tasks. As will be explained in greater detail herein, modules 102 may include a wireless interface module 104, a distance module 106, a precise-time module 108, and a synchronization module 110. Although illustrated as separate elements, one or more of modules 102 in FIG. 1 may represent portions of a single module or application.

In certain embodiments, one or more of modules 102 in FIG. 1 may represent one or more software applications or programs that, when executed by a computing device, may cause the computing device to perform one or more tasks. For example, and as will be described in greater detail below, one or more of modules 102 may represent modules stored and configured to run on one or more computing devices, such as the devices illustrated in FIG. 2 (e.g., precise-time device 202 and/or GNSS-enabled device 206). One or more of modules 102 in FIG. 1 may also represent all or portions of one or more special-purpose computers configured to perform one or more tasks.

As illustrated in FIG. 1, example system 100 may also include one or more memory devices, such as memory 140. Memory 140 generally represents any type or form of volatile or non-volatile storage device or medium capable of storing data and/or computer-readable instructions. In one example, memory 140 may store, load, and/or maintain one or more of modules 102. Examples of memory 140 include, without limitation, Random Access Memory (RAM), Read Only Memory (ROM), flash memory, Hard Disk Drives (HDDs), Solid-State Drives (SSDs), optical disk drives, caches, variations or combinations of one or more of the same, and/or any other suitable storage memory.

As illustrated in FIG. 1, example system 100 may also include one or more physical processors, such as physical processor 130. Physical processor 130 generally represents any type or form of hardware-implemented processing unit capable of interpreting and/or executing computer-readable instructions. In one example, physical processor 130 may access and/or modify one or more of modules 102 stored in memory 140. Additionally or alternatively, physical processor 130 may execute one or more of modules 102 to facilitate maintain the mapping system. Examples of physical processor 130 include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, and/or any other suitable physical processor.

As illustrated in FIG. 1, example system 100 may also include one or more additional elements 120, such as a wireless interface 122, an oscillator 124, a time signal 128, a distance 129, and a precise time 150. Time signal 128, distance 129, and/or precise time 150 may be stored on a local storage device, such as memory 140, or may be accessed remotely. Wireless interface 122 may represent a hardware interface (e.g., an antenna) for wireless communications and may operate in conjunction with or otherwise be integrated with wireless module 104, as will be explained further below. Oscillator 124 may represent an oscillator or other mechanical and/or electronic device for producing a periodic signal, and in some examples may have a small footprint suitable for a peripheral device form factor. Time signal 128 may represent a wireless signal used for calculating a precise time. Distance 129 may represent a distance value associated with time signal 128, as will be explained further below. Precise time 150 may represent a precise time value, as will be explained further below.

Example system 100 in FIG. 1 may be implemented in a variety of ways. For example, all or a portion of example system 100 may represent portions of example network environment 200 in FIG. 2.

FIG. 2 illustrates an exemplary network environment 200 implementing aspects of the present disclosure. The network environment 200 may include a precise-time device 202 (which may correspond to system 100), a network 204, and GNSS-enabled device 206. Precise-time device 202 may be a peripheral device, such as a peripheral for connecting to a port of a computing device (e.g., a laptop computer, a desktop computer, tablet device, smartphone, or other computing device). Precise-time device 202 may include a physical processor 130, which may be one or more processors, memory 140, which may store data such as one or more of additional elements 120, including wireless interface 122 and oscillator 124.

GNSS-enabled device 206 may represent or include one or more devices having or otherwise communicatively coupled to a GNSS antenna 226. GNSS-enabled device 206 may be a computing device, such as a time server or other server, that may track precise time by communicating, via GNSS antenna 226, to a GNSS network. Although GNSS-enabled device 206 is described herein as acquiring a precise time from a GNSS network, in other examples GNSS-enabled device 206 may acquire the precise time from other sources to send an appropriate time signal. GNSS-enabled device 206 may send a time signal (e.g., time signal 128) to precise-time device 202 via network 204, using wireless interface 122.

Precise-time device 202 may be communicatively coupled to GNSS-enabled device 206 through network 204. Network 204 may represent any type or form of communication network, such as the Internet, and may comprise one or more physical connections, such as LAN, WAN, and/or wireless connections. In some examples, network 204 may correspond to a particular wireless protocol, such as ultra-wideband ("UWB") or another protocol suitable for sending a sync pulse (as opposed to a protocol that may prioritize reduced energy consumption, distance of signals, etc.).

FIG. 3 is a flow diagram of an exemplary computer-implemented method 300 for determining and synchronizing a precise time using a precise-time device. The steps shown in FIG. 3 may be performed by any suitable computer-executable code and/or computing system, including the system(s) illustrated in FIGS. 1 and/or 2. In one example, each of the steps shown in FIG. 3 may represent an algorithm whose structure includes and/or is represented by multiple sub-steps, examples of which will be provided in greater detail below.

As illustrated in FIG. 3, optionally at step 302 one or more of the systems described herein may provision a precise-time device in a peripheral storage device connector of a computing device. In one example, a form factor of precise-time device 202 may be similar to a form factor of a peripheral storage device and may accordingly interface with a computing device.

FIG. 4 illustrates an operating environment 400 that may include a precise-time device 402 (which may correspond to precise-time device 202) coupled to a computing device 403. FIG. 4 further includes a GNSS-enabled device 406 (which may correspond to GNSS-enabled device 206), a GNSS antenna 426 (which may correspond to GNSS antenna 226), a computing device 407, a time signal 428 (which may correspond to time signal 128), and a distance 429 (which may correspond to distance 129), which will be described further below.

Computing device 403 may correspond to any computing device, such as a laptop computer, a desktop computer, tablet device, smartphone, or other computing device that a user may use. In some examples, precise-time device 402 may have a form factor of a peripheral device, such as a peripheral storage device, and may physically connect to computing device 403 via an appropriate peripheral connector, such as a peripheral port externally available on computing device 403 or an internal connector inside of computing device 403. In some examples, precise-time device 402 may further include a storage device such that precise-time device 402 may serve as a peripheral storage device in addition to providing precise time synchronization described herein.

The systems described herein may perform step 302 in a variety of ways. In some examples, provisioning precise-time device 402 may include physically connecting precise-time device 402 to computing device 403 (e.g., plugging in precise-time device 402 to the appropriate connector on computing device 403). In some examples, provisioning precise-time device 402 may include powering on and/or otherwise enabling precise-time device 402 for operation.

Returning to FIG. 3, at step 304 one or more of the systems described herein may receive, via a wireless interface of the precise-time device, a time signal. For example, wireless interface module 104 may, using wireless interface 122, receive time signal 128.

In some embodiments, the term "time signal" may refer to a signal for computing device to determine a precise time and/or correct an internal clock. In some examples, a time signal may be a pulse signal that may have a pulse frequency that may be used to adjust or correct a computing device's internal clock and/or clock signal. In some examples, a time signal may serve as a reference for clock corrections, for instance having an actual time value or other time-related data. A time signal may be used to correct clock drift (e.g., when a clock desynchronizes from a reference clock). Further, in some examples a time signal may be targeted for a particular device or may serve as a general reference for multiple devices.

The systems described herein may perform step 304 in a variety of ways. In one example, precise-time device 402 may receive time signal 428 from GNSS-enabled device 406. GNSS-enabled device 406 may be configured to generate time signal 428. In some examples, GNSS-enabled device 406 may have a form factor of a peripheral device (which in some examples may further include a storage device) and accordingly interface with computing device 407, similar to how precise-time device 402 may interface with computing device 403 as described herein. In other examples, GNSS-enabled device 406 may be integrated with computing device 407. GNSS-enabled device 406 may be configured to maintain a stable precise time.

Computing device 407 may correspond to a time server or other server that may require precise time for synchronizing with other computing devices. GNSS-enabled device 406 may connect, using GNSS antenna 426, with a GNSS network to acquire the precise time. To synchronize computing device 407 with computing device 403, GNSS-enabled device 406 may generate and send time signal 428.

In some examples, GNSS-enabled device 406 may wirelessly send time signal 428 to precise-time device 402 over a wireless network protocol such as UWB or any other protocol that may be suitable for time modulation (e.g., by generating radio energy at specific time intervals). Time signal 428 may be, for example, a pulse signal that may be used for synchronization. In some examples, time signal 428 may include data, such as data for establishing communication (e.g., source and destination devices), data for calculating time, etc.

Turning back to FIG. 3, optionally at step 306 one or more of the systems described herein may estimate a distance between the precise-time device and a GNSS-enabled device. For example, distance module 106 may estimate distance 129.

The systems described herein may perform step 306 in a variety of ways. In one example, distance module 106 may estimate distance 429, in FIG. 4, between precise-time device 402 and GNSS-enabled device 406 based on a signal strength of time signal 428. Alternatively or in addition, distance module 106 may rely on other data, such as network topology data, predetermined and/or known distance data, etc.

At step 308 one or more of the systems described herein may determine, by a processor of the precise-time device using an oscillator of the precise-time device and the received time signal, a precise time. For example, precise-time module 108 may determine precise time 150 using physical processor 130, oscillator 124 and time signal 128.

In some embodiments, the term "precise time" may refer to a time that is accurate (e.g., with respect to a real-world actual time) within a tolerance, such as 10 milliseconds, 10 microseconds, 10 nanoseconds, etc. In some examples, a precise time may also refer to a correction and/or calculation needed by a computing device for making its internal clock more accurate. A precise time may allow precise time operations and/or synchronization with other devices referencing the same precise time.

The systems described herein may perform step 308 in a variety of ways. In one example, precise-time module 108 may correct or otherwise adjust a clock signal from oscillator 124 using time signal 128. The clock signal may degrade or otherwise lose precision and/or accuracy due to various factors, such as temperature fluctuations, physical disturbances, material degradation, etc. experienced by oscillator 124. Precise-time module 108 may use time signal 128 (e.g., a pulse frequency of time signal 128 and/or data transmitted with time signal 128) to correct the clock signal. In some examples, precise-time module 108 may factor distance 129 for the correction (e.g., to account for a delay for time signal 128 to travel distance 129).

Thus, in some examples precise time 150 may correspond to this correction to the clock signal. In other examples, precise time 150 may correspond to a particular timestamp in relation to a particular milestone or event.

At step 310 one or more of the systems described herein may synchronize with one or more remote devices using the precise time. For example, synchronization module 110 may synchronize with one or more remote devices using precise time 150.

In some embodiments, the term "synchronize" may refer to coordination of independent clocks of computing devices, for instance to set each computing device's clock to the same reference time within an acceptable tolerance. Synchronization may allow precise time operations amongst the computing devices, such as communication (e.g., serial communication in which data may be sent in a particular order). In addition, due to various factors for clock drift, even when initially synchronized, a set of independent clocks may diverge, requiring resynchronization.

The systems described herein may perform step 310 in a variety of ways. In one example, computing device 403 may synchronize with computing device 407. This synchronization may improve a performance of communication between computing device 403 and computing device 407, particularly for time-sensitive applications.

As illustrated in FIG. 4, after provisioning computing device 403 with precise-time device 402, and similarly provisioning computing device 407 with GNSS-enabled device 406, computing device 403 may be able to synchronize with computing device 407. GNSS-enabled device 406 may read or otherwise acquire an actual time from a GNSS network using GNSS antenna 426. GNSS-enabled device 406 may generate time signal 428 using, for example, the actual time from the GNSS network and an internal oscillator. As described herein, time signal 428 may be a pulse signal that may be used to adjust or correct for clock drift. GNSS-enabled device 406 may wirelessly send time signal 428 to precise-time device 402. Precise-time device 402 may determine a precise time such that computing device 403 may synchronize with computing device 407 and other devices that are synchronized with computing device 407. For example, a user of computing device 403 may interact with a user of another synchronized device with reduced delay or lag between interactions.

Time servers are generally standalone devices within a distributed system because they require precision components that are not typically included in consumer computers (e.g., PCs and Laptops). Additionally, time servers are generally non-mobile because they need a physical coax connection to a GNSS antenna (global navigation satellite system that transmits positioning and timing data to GNSS antenna) to enable an internal precision clock. As such, using or developing consumer applications on laptops or other mobile devices that require precision timing is challenging. In contrast, the systems and methods described herein provide, for example, a peripheral component that uses ultra-wideband to synchronize with GNSS without the need for a physical coax connection to a GNSS antenna.

### Example Embodiments

Example 1: A peripheral precise-time device may include: a wireless interface for receiving a time signal; an oscillator; and a processor configured to: determine, using the oscillator and the time signal, a precise time; and synchronize with one or more remote devices using the precise time.

Example 2: The device of Example 1, wherein the time signal is received from a global navigation satellite system (GNSS)-enabled device configured to generate the time signal.

Example 3: The device of Example 2, wherein determining the precise time comprises estimating a distance to the GNSS-enabled device.

Example 4: The device of Example 2 or 3, wherein estimating the distance is based on a signal strength of the time signal.

Example 5: The device of Example 2, 3, or 4, wherein the GNSS-enabled device comprises: a second wireless interface for sending the time signal; a GNSS antenna for receiving a GNSS signal; a second oscillator; and a second processor configured to generate, using the second oscillator and the GNSS signal, the time signal.

Example 6: The device of any of Examples 1-5, wherein a form factor of the device is similar to a form factor of a peripheral storage device.

Example 7: The device of any of Examples 1-6, further comprising a storage device.

Example 8: The device of any of Examples 1-7, wherein the wireless interface is configured for an ultra-wideband (UWB) protocol.

Example 9: A system for precise time may include: a precise-time device comprising: a wireless interface for receiving a time signal; an oscillator; and a processor configured to: determine, using the oscillator and the time signal, a precise time; and synchronize with one or more remote devices using the precise time. The system may also include a global navigation satellite system (GNSS)-enabled device comprising: a second wireless interface for sending the time signal to the precise-time device; a GNSS antenna for receiving a GNSS signal; a second oscillator; and a second processor configured to generate, using the GNSS signal and the second oscillator, the time signal.

Example 10: The system of Example 9, wherein determining the precise time comprises estimating a distance between the precise-time device and the GNSS-enabled device.

Example 11: The system of Example 9 or 10, wherein estimating the distance is based on a signal strength of the time signal.

Example 12: The system of Example 9, 10, or 11, wherein a form factor of the precise-time device is similar to a form factor of a peripheral storage device.

Example 13: The system of any of Examples 9-12, wherein the precise-time device further comprises a storage device.

Example 14: The system of any of Examples 9-13, wherein the wireless interface and the second wireless interface are configured for an ultra-wideband (UWB) protocol.

Example 15: A computer-implemented method for determining a precise time may include: receiving, via a wireless interface of a precise-time device, a time signal; determining, by a processor of the precise-time device using an oscillator of the precise-time device and the received time signal, a precise time; and synchronizing with one or more remote devices using the precise time.

Example 16: The method of Example 15, wherein the time signal is received from a global navigation satellite system (GNSS)-enabled device configured to generate the time signal.

Example 17: The method of Example 16, wherein determining the precise time comprises estimating a distance between the precise-time device and the GNSS-enabled device.

Example 18: The method of Example 16 or 17, wherein estimating the distance is based on a signal strength of the time signal.

Example 19: The method of any of Examples 15-18, wherein receiving the time signal further comprises receiving the time signal using an ultra-wideband (UWB) protocol.

Example 20: The method of any of Examples 15-19, further comprising provisioning the precise-time device in a peripheral storage device connector of a computing device.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive a time signal to be transformed, transform the time signal, output a result of the transformation to determine a precise time, use the result of the transformation to synchronize with other devices, and store the result of the transformation to maintain the precise time. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A device comprising:
a wireless interface for receiving a time signal;
an oscillator; and
a processor configured to:
determine, using the oscillator and the time signal, a precise time; and
synchronize with one or more remote devices using the precise time.

2. The device of claim 1, wherein the time signal is received from a global navigation satellite system (GNSS)-enabled device configured to generate the time signal.

3. The device of claim 2, wherein the processor is configured to determine the precise time by estimating a distance to the GNSS-enabled device.

4. The device of claim 3, wherein the processor is configured to estimate the distance based on a signal strength of the time signal.

5. The device of any of claims 2 to 4, wherein the GNSS-enabled device comprises:
a second wireless interface for sending the time signal;
a GNSS antenna for receiving a GNSS signal;
a second oscillator; and
a second processor configured to generate, using the second oscillator and the GNSS signal, the time signal.

6. The device of any preceding claim, wherein a form factor of the device is similar to a form factor of a peripheral storage device.

7. The device of any preceding claim, further comprising a storage device.

8. The device of any preceding claim, wherein the wireless interface is configured for an ultra-wideband (UWB) protocol.

9. A system comprising:
the device of any preceding claim; and
a global navigation satellite system (GNSS)-enabled device comprising:
a second wireless interface for sending the time signal to the device;
a GNSS antenna for receiving a GNSS signal;
a second oscillator; and
a second processor configured to generate, using the GNSS signal and the second oscillator, the time signal.

10. The system of claim 9, wherein the system is configured to determine the precise time by estimating a distance between the device and the GNSS-enabled device; optionally wherein the system is configured to estimate the distance based on a signal strength of the time signal.

11. The system of claim 9 or claim 10, wherein the wireless interface and the second wireless interface are configured for an ultra-wideband (UWB) protocol.

12. A method comprising:
receiving, via a wireless interface of a precise-time device, a time signal;
determining, by a processor of the precise-time device using an oscillator of the precise-time device and the received time signal, a precise time; and
synchronizing with one or more remote devices using the precise time.

13. The method of claim 12, wherein the time signal is received from a global navigation satellite system (GNSS)-enabled device configured to generate the time signal; optionally wherein determining the precise time comprises estimating a distance between the precise-time device and the GNSS-enabled device; optionally wherein estimating the distance is based on a signal strength of the time signal.

14. The method of claim 12 or claim 13, wherein receiving the time signal further comprises receiving the time signal using an ultra-wideband (UWB) protocol.

15. The method of any of claims 12 to 14, further comprising provisioning the precise-time device in a peripheral storage device connector of a computing device.
